# EUROPÄISCHE PATENTSCHRIFT

(11) **EP 3 078 519 B1**
(45) Veröffentlichungstag und Bekanntmachung des Hinweises auf die Patenterteilung: **08.05.2019**
(21) Anmeldenummer: 16161165.2
(22) Anmeldetag: 18.03.2016
(51) Int. Cl.: B60J 5/04

(54) **TRÄGERBAUTEIL MIT SPEZIELLEM DICHTUNGSKANAL**
HOLDER COMPONENT WITH A SPECIAL SEAL CHANNEL
COMPOSANT PORTEUR COMPRENANT UN CANAL D'ETANCHEITE SPECIAL

(30) Priorität: 30.03.2015 DE 102015205667
(43) Veröffentlichungstag der Anmeldung: 12.10.2016
(73) Patentinhaber: Brose Fahrzeugteile GmbH & Co. Kommanditgesellschaft, Bamberg, 96052 Bamberg (DE)
(72) Erfinder: OERTEL, Nico, 96199 Zapfendorf (DE); ANGERMÜLLER, Melanie, 98663 Hellingen (DE); SALHOFF, Thomas, 96103 Hallstadt (DE); HEPPNER, Matthias, 96224 Burgkunstadt (DE); KRAUSE, David, 97500 Ebelsbach (DE); BERNHARD, Andre, 96179 Rattelsdorf (DE); SALZMANN, Michael, 96052 Bamberg (DE); MANTEL, Robert, 96114 Hirschaid (DE)
(74) Vertreter: Maikowski & Ninnemann Patentanwälte Partnerschaft mbB

(56) Entgegenhaltungen:
- WO-A1-2007/006296
- DE-A1-102004 053 622
- DE-A1-102009 042 350
- JP-A- 2011 173 571

## Beschreibung

Die vorliegende Erfindung betrifft insbesondere ein Trägerbauteil nach dem Oberbegriff des Anspruchs 1.

Ein solches Trägerbauteil wird beispielsweise durch einen sogenannten Aggregate- oder Modulträger für eine Fahrzeugtür gebildet. Ein gattungsgemäßes Trägerbauteil ist jedoch nicht auf die Verwendung innerhalb einer Fahrzeugtür beschränkt. Grundsätzlich weist ein gattungsgemäßes Trägerbauteil eine Trägergrundfläche auf, an der Funktionskomponenten eines Fensterhebers vorgesehen sind und die eine Trägerebene definiert, entlang der sich im Wesentlichen die Trägergrundfläche erstreckt. Das Trägerbauteil ist ferner zur Anbringung an einem Fahrzeugteil, wie zum Beispiel einem Türinnenblech oder einem Karosserieteil im Bereich eines hinteren Kotflügels, vorgesehen und weist hierfür an einem Randbereich eine Dichtung auf, mittels der das Trägerbauteil dichtend an dem Fahrzeugteil angebracht werden kann. Die Dichtung ist hierbei zumindest teilweise in einem an dem Randbereich des Trägerbauteils entlang verlaufenden Dichtungskanal aufgenommen. Ein derartiges Trägerbauteil ist aus der WO 2007/006296 A1 bekannt.

Üblicherweise ist ein solcher Dichtungskanal an dem Trägerbauteil umlaufend vorgesehen und weist ein im Querschnitt U-förmiges Querschnittsprofil auf. Für die Herstellung der Dichtung wird vorzugsweise Dichtungsmaterial angespritzt und hierbei typischerweise von oben in den Dichtungskanal des liegenden Trägerbauteils eindosiert. Das Einbringen des Dichtungsmaterials erfolgt hierbei üblicherweise von 6-Achs-Robotern und/oder Linearrobotern orthogonal zum Kanalboden des Dichtungskanals, also orthogonal zu einem Nutgrund oder Kanalboden der Dichtkontur.

Bei an dem Trägerbauteil über einen äußeren Rand der Trägergrundfläche hinausragenden Komponenten ist eine solche Einbringung des Dichtungsmaterials jedoch nicht mehr möglich. So erstreckt sich der über den Rand der Trägergrundfläche hinausragende Abschnitt auch regelmäßig über zumindest einen Teil des Dichtungskanals hinweg. Das Einbringen von Dichtungsmaterial orthogonal zum Kanalboden und orthogonal zur Trägerebene ist hier somit durch den hinausragenden Abschnitt verhindert.

Beispielsweise wird eine solche hinausragende Funktionskomponente des Fensterhebers durch eine in das Trägerbauteil integrierte Führungsschiene gebildet. Diese steht gegebenenfalls über einen oberen oder unteren Rand der Trägergrundfläche hinaus, um für die zu verstellende Fensterscheibe einen größeren Hub bereitzustellen. Für eine solche Lösung ist dann das Anbringen der Dichtung deutlich aufwendiger als beispielsweise bei einem Trägerbauteil ohne derartige Überstände, wie es z.B. in der DE 20 2007 003 226 U1 offenbart ist.

Aber auch ein Zugseil des Fensterhebers kann über einen äußeren Rand der Trägergrundfläche hinausragen. Hierbei wird das Zugseil beispielsweise an einem sich über den Dichtungskanal hinweg erstreckenden Abschnitt des Trägerbauteils oder einem separaten Bauteil, das an dem Trägerbauteil festgelegt ist, umgelenkt. Trägerbauteile mit einem solchen überstehenden Abschnitt, an dem zur Hubvergrößerung ein Umlenkelement z.B. in Form einer Seilrolle angeordnet ist, gehen beispielsweise aus der DE 10 2009 042 350 A1 und der DE 10 2008 012 434 A1 hervor. Die sich durch den überstehenden Abschnitt ergebende Problematik beim Anspritzen des Dichtungsmaterials im Bereich des Überstandes wird hier dadurch umgangen, dass der Abschnitt angefedert ist und damit im Bereich des Überstandes weggeklappt werden kann oder der Abschnitt schwenkbar an dem Trägerbauteil gelagert und in eine Funktionsposition verschwenkt werden kann, in der er nicht über dessen äußeren Rand hinausragt. Die vorgenannten Lösungen sind jedoch teilweise mit hohem technischem Aufwand bei der Herstellung und der Montage verbunden.

Eine nachträgliche Anbringung überstehender Abschnitte an dem Trägerbauteil, nachdem dieses mit einer Dichtung versehen wurde, ist zwar grundsätzlich möglich, erhöht aber gegebenenfalls ebenso den Montageaufwand. Darüber hinaus werden für bestimmte Anwendungszwecke Trägerbauteile mit integrierten Fensterheber-Führungsschienen bevorzugt, die über einen äußeren Rand des Trägerbauteils vorstehen. Auch hierfür ist eine effektive und automatisierbare Möglichkeit angestrebt, um an einem solchen Trägerbauteil ein Dichtungsmaterial anzubringen.

Diese Aufgabe wird mit einem Fahrzeug-Trägerbauteil nach dem Anspruch 1 gelöst.

Ein erfindungsgemäßes Trägerbauteil weist hierbei insbesondere mindestens einen an einem Randbereich des Trägerbauteils entlang verlaufenden Dichtungskanal auf, mit einer hierin zumindest teilweise aufgenommenen Dichtung, mittels der das Trägerbauteil dichtend an einem Fahrzeugteil, wie zum Beispiel einem Türinnenblech, angebracht werden kann. Wenigstens eine Funktionskomponente des Fensterhebers ragt über einen äußeren Rand einer Trägergrundfläche des Trägerbauteils hinaus oder ist in einer Weise hieran angeordnet, dass die Funktionskomponente (teilweise oder vollständig) über den äußeren Rand der Trägergrundfläche hinausragt, so dass sich ein über den Rand der Trägergrundfläche hinausragender Abschnitt dieser Funktionskomponente, ein die Funktionskomponente tragender Abschnitt des Trägerbauteils oder ein Abschnitt eines die Funktionskomponente tragenden und an dem Trägerbauteil befestigten Bauteils über zumindest einen Teil des Dichtungskanal hinweg erstreckt. Zumindest in einem Überstandsbereich, in dem sich der Abschnitt über den Dichtungskanal hinweg erstreckt, ist der Dichtungskanal erfindungsgemäß im Querschnitt durch wenigstens zwei Schenkel gebildet, die jeweils einen äußeren Rand des Dichtungskanals definieren und deren Enden in einer Kanalebene liegen, die geneigt zu der durch die Trägergrundfläche definierten Trägerebene verläuft, so dass der Dichtungskanal in einer die Trägerebene aufspannenden Raumrichtung offen ist und vorzugweise eine Dichtung auch ohne Weiteres in dem Überstandsbereich an das Trägerbauteil angespritzt werden kann. Die wenigstens zwei Schenkel sind dabei über einen sich zwischen ihnen erstreckenden Kanalboden des Dichtungskanals miteinander verbunden, wobei die zwei Schenkel unter verschiedenen Winkeln zu dem Kanalboden orientiert sind.

Mit einem erfindungsgemäßen Trägerbauteil ist es möglich, wesentliche Aspekte eines industriell bewährten Verfahrens zum Anspritzen von Dichtungsmaterial auch in dem Überstandsbereich einzusetzen. Über die erfindungsgemäß vorgesehene Ausbildung des Dichtungskanals kann hierbei weiterhin vergleichsweise einfach gewährleistet werden, dass nach einem Einbringen eines zunächst flüssigen Dichtungsmaterials in den Dichtungskanal dieses hierin verbleibt und nicht wegfließt. So wurden in Versuchen beispielsweise gute Ergebnisse mit einem schäumbaren Dichtungsmaterial erzielt, das zunächst in flüssiger Form in den erfindungsgemäß ausgebildeten Dichtungskanal eingebracht wird und innerhalb weniger Sekunden ausschäumt. Die die Enden der Schenkel des Dichtungskanals verbindende Kanalebene ist vorzugsweise um einen Neigungswinkel von 30 Grad bis 60 Grad zur Trägerebene des Trägerbauteils geneigt, so dass der Dichtungskanal in eine vom Zentrum der Trägergrundfläche nach außen weisende Raumrichtung offen ist. Derart kann das Dichtungsmaterial beispielsweise entlang dieser Raumrichtung von oben problemlos in den Dichtungskanal auch in dem Überstandsbereich eingebracht werden, ohne dass das noch flüssige Dichtungsmaterial wegfließt.

In möglichen Ausführungsvarianten ist der Dichtungskanal zumindest in dem Überstandsbereich im Querschnitt J- oder L-förmig. In einer alternativen Ausführungsvariante ist der Dichtungskanal zumindest in dem Überstandsbereich im Querschnitt U- oder V-förmig. Während bei einer J- oder L-förmigen Ausbildung des Dichtungskanals die zwei den Kanal berandenden Schenkel asymmetrisch und somit nicht gleich lang ausgebildet sind, ist bei einer im Querschnitt U- oder V-förmigen Ausbildung des Dichtungskanals eine im Wesentlichen gleiche Länge beider Schenkel vorgesehen.

Eine mögliche Ausprägung eines erfindungsgemäßen Trägerbauteils ist beispielsweise ein Modul- oder Aggregateträger für eine Kraftfahrzeugtür. Vorzugsweise ist das Trägerbauteil ferner aus Kunststoff gefertigt. Die erfindungsgemäß durch den Dichtungskanal vorgegebene Dichtkontur an dem Trägerbauteil eignet sich vor allem für die Integration mindestens einer Führungsschiene an dem Trägerbauteil, die mit wenigstens einem Ende über einen äußeren Rand der Trägergrundfläche hinausragt. Gleichwohl sind auch andere Ausführungsvarianten für ein erfindungsgemäßes Trägerbauteil möglich.

Die wenigstens zwei Schenkel, die das Querschnittsprofil des Dichtungskanals zumindest in dem Überstandsbereich prägen, können von der Trägergrundfläche und auch von der Trägerebene vorspringend ausgebildet sein. Ein sich zwischen zwei Schenkeln erstreckender Kanalboden wäre beispielsweise bei einer im Querschnitt J- oder U-förmigen Ausbildung des Dichtungskanals gegeben.

Die Längen der beiden Schenkel und deren Winkel relativ zu einem Kanalboden sind so gewählt, dass für die Bildung der Dichtung in den Dichtungskanal einzubringendes Dichtungsmaterial problemlos im Wesentlichen entlang der Trägerebene von oben - gegebenenfalls auch geneigt zur Vertikalen - in den Dichtungskanal eingespritzt werden kann. Die Längen und Winkel können so gewählt sein, dass das Trägerbauteil während des Anbringens der Dichtung in einer relativ zur Horizontalen geneigten Lage gehalten werden kann und durch die Geometrie des Dichtungskanals in dem Überstandsbereich sichergestellt ist, dass hierbei das noch flüssige Dichtungsmaterial nicht unkontrolliert wegfließt.

Beispielsweise ist in einer Ausführungsvariante vorgesehen, dass ein erster kürzerer (innerer) Schenkel unter einem Winkel zu dem Kanalboden des Dichtungskanals verläuft, der kleiner ist als ein Winkel, unter dem ein zweiter längerer (äußerer) Schenkel zu dem Kanalboden verläuft. Der zweite längere Schenkel, der vorzugsweise am Rand der Trägergrundfläche liegt, kann somit ohne Weiteres eine größere Abstützfläche für das ausgeschäumte oder ausgehärtete Dichtungsmaterial bilden, während über den ersten, kürzeren Schenkel während der Herstellung vor allem das Ausfließen des noch flüssigen Dichtungsmaterials verhindert ist. Der kürzere erste Schenkel bildet hierbei vorzugsweise eine Art Schwallrand, der einem Ausfließen des Dichtungsmaterials aus dem Dichtungskanal entgegenwirkt.

Um über den zweiten längeren Schenkel ferner den Dichtungskanal möglichst weit in eine die Trägerebene aufspannende Raumrichtung nach außen hin zu öffnen, verläuft dieser vorzugsweise unter einem stumpfen Winkel zu dem Kanalboden. Verläuft folglich die Trägerebene bei bestimmungsgemäß eingebautem Trägerbauteil im Wesentlichen entlang der Vertikalen, ist der zweite längere und nach außen weisende Schenkel des Dichtungskanals zumindest in dem Überstandsbereich zur Vertikalen geneigt.

Der Dichtungskanal kann an dem Rand des Trägerbauteils umlaufend ausgebildet sein und mindestens zwei Bereiche aufweisen, die im Querschnitt zueinander unterschiedlich sind. Derart kann folglich ein einzelner Dichtungskanal in einem Überstandsbereich, in dem ein über die Trägergrundfläche hinausragender Abschnitt vorliegt, ein anderes Querschnittsprofil aufweisen, als in einem Bereich außerhalb dieses Überstandsbereichs. So kann folglich auch eine Herstellung der umlaufenden Dichtung teilweise noch auf konventionelle Art und Weise erfolgen, bei der flüssiges Dichtungsmaterial in einen rinnenartigen, im Querschnitt U-förmigen Dichtungskanal, der senkrecht zur Trägerebene offen ist, im Wesentlichen senkrecht zur Trägerebene eingespritzt wird.

Anstelle eines einzelnen umlaufenden Dichtungskanal mit unterschiedlichen Querschnittsprofilen können selbstverständlich auch mindestens zwei im Querschnitt unterschiedliche Dichtungskanäle an dem Trägerbauteil vorgesehen sein; einerseits ein Dichtungskanal für den jeweiligen Überstandsbereich mit einem erfindungsgemäß ausgebildeten Querschnittsprofil und andererseits wenigstens ein weiterer Dichtungskanal abseits des Überstandsbereichs mit einem abweichend ausgestalteten Querschnittsprofil, zum Beispiel einem konventionellen Querschnittsprofil. Die unterschiedlichen Dichtungskanäle sind hierbei beispielsweise quer zur Ihrer Längserstreckungsrichtung beabstandet und liegen teilweise nebeneinander.

Gemäß einem weiteren Erfindungsaspekt wir ferner eine Baugruppe vorgeschlagen, die neben einem erfindungsgemäßen Trägerbauteil wenigstens ein Fahrzeugteil aufweist, das eine relativ zur Trägergrundfläche geneigt verlaufende Dichtfläche aufweist, an der das Trägerbauteil im Bereich seiner Dichtung dichtend anliegt. Die Neigung der Dichtfläche und die Neigung der Kanalebene in dem Überstandsbereich des Trägerbauteils sind vorzugsweise aufeinander abgestimmt, so dass über die geneigt verlaufende Dichtfläche des Fahrzeugteils eine möglichst großflächige Anlage der Dichtung bei ausreichender Abstützung über die beiden, gegebenenfalls an dem Trägerbauteil vorspringenden Schenkel des Dichtungskanals gegeben ist.

Beispielsweise verlaufen in dem Überstandsbereich die Kanalebene des Dichtungskanals und die Dichtfläche des Fahrzeugteils zueinander parallel, wenn das Trägerbauteil bestimmungsgemäß an dem Fahrzeugteil angebracht ist. Die schräge Dichtfläche liegt hierbei beispielsweise an einem Rand eines Türinnenblechs vor, der eine Montageöffnung innerhalb einer Fahrzeugtür berandet. Über diese Montageöffnung werden üblicherweise an dem Trägerbauteil bereits vormontierte Funktionskomponenten eines Fensterhebers in einen zwischen Türaußenblech und Türinnenblech gebildeten Hohlraum eingeführt. Über das Trägerbauteil wird die Montageöffnung dann dichtend verschlossen. Entgegen bisher üblicher Konstruktionen ist in einer Ausführungsvariante der Erfindung der die Montageöffnung berandende Abschnitt des Türinnenblechs, an dem das Trägerbauteil über seine Dichtung anliegt, nicht im Wesentlichen parallel zur Trägerebene und damit im Wesentlichen parallel zur Vertikalen verlaufend ausgeführt, sondern geneigt hierzu, vorzugsweise in Richtung der Montageöffnung und in Richtung auf das Türaußenblech.

Ein weiterer Aspekt der vorliegenden Erfindung ist ein Verfahren zur Herstellung einer Dichtung an einem erfindungsgemäßen Trägerbauteil.

Hierbei wird die Dichtung aus einem schäumbaren Dichtungsmaterial hergestellt und das schäumbare Dichtungsmaterial in flüssiger Form in den mindestens einen Dichtungskanal in einer Menge dosiert, dass die Dichtung nach Ausschäumen des Dichtungsmaterials an den wenigstens zwei in dem Überstandsbereich vorhandenen Schenkeln des Dichtungskanals abgestützt ist.

Die Eindosierung des noch flüssigen Dichtungsmaterials erfolgt üblicherweise über einen Dosierkopf eines Dosierwerkzeuges. Der Dosierkopf kann hierbei aufgrund der erfindungsgemäß vorgesehenen Geometrie des Dichtungskanals auch in dem Überstandsbereich problemlos an den Dichtungskanal herangeführt werden, beispielsweise im Wesentlichen parallel zur Trägerebene. Beim Eindosieren des Dichtungsmaterials in dem Dichtungskanal wird dann der Dosierkopf oder das Trägerbauteil in eine längs zu dem Dichtungskanal verlaufende Verstellrichtung verfahren.

In einer Ausführungsvariante wird das Trägerbauteil während des Einbringens des Dichtungsmaterials in dem Überstandsbereich zumindest zeitweise geneigt zur Horizontalen und vorzugsweise auch geneigt zu dem Dosierkopf gehalten. In einer solchen Ausführungsvariante wird somit das flächige Trägerbauteil nicht wie bisher üblich mit einem Dichtungsmaterial versehen, indem das Trägerbauteil im Wesentlichen parallel zur Horizontalen gehalten, das heißt beispielsweise liegend bearbeitet wird und der Dosierkopf lediglich im Wesentlichen orthogonal zur Trägerebene Dichtungsmaterial in dem umlaufenden Dichtungskanal einbringt, wobei hierfür der Dosierkopf am Rand des Trägerbauteils entlang verfahren wird oder das Trägerbauteil selbst relativ zu dem Dosierkopf um eine zur Trägerebene senkrechte Drehachse gedreht wird. Vielmehr ist in einer Ausführungsvariante eine vorzugsweise automatisierte Herstellung der Dichtung an dem Trägerbauteil vorgesehen, bei der das Trägerbauteil innerhalb einer Verarbeitungsvorrichtung geneigt zur Horizontalen gehalten wird, während die Dichtung - zumindest in dem Überstandsbereich - angespritzt wird.

Für die Herstellung der Dichtung, die üblicherweise am Ende des Herstellungsprozesses im Form einer Dichtraupe an dem Trägerbauteil vorliegt, kann alternativ oder ergänzend vorgesehen sein, dass der Dosierkopf des Dosierwerkzeuges während des Einbringens des Dichtungsmaterials zumindest zeitweise geneigt zur Vertikalen und vorzugsweise auch geneigt relativ zu dem Trägerbauteil gehalten wird, um gerade in dem Überstandsbereich des Trägerbauteils die Dichtung herzustellen.

Entsprechend einer der vorgenannten Ausführungsvarianten kann auch bei einem erfindungsgemäßen Herstellungsverfahren vorgesehen sein, dass ein einzelner Dichtungskanal mit mehreren Querschnittsprofilen an dem Trägerbauteil vorgesehen ist oder mehrere, räumlich voneinander separierte Dichtungskanäle mit im Querschnitt unterschiedlich ausgestalteten Profilen an dem Trägerbauteil vorgesehen sind.

So kann beispielsweise an einem Überstandsbereich der Dichtungskanal mit der geneigt zur Trägerebene verlaufenden Kanalebene vorgesehen sein, während außerhalb des Überstandsbereichs ein konventioneller Dichtungskanal bzw. ein konventionelles Querschnittsprofil vorgesehen ist, bei dem die Ränder des Dichtungskanals in einer parallel zur Trägerebene verlaufenden Ebene liegen. Derart kann das Dichtungsmaterial in den außerhalb des Überstandsbereichs liegenden Dichtungskanal wie bisher üblich eingebracht werden, indem das Trägerbauteil so ausgerichtet wird, dass sich die Trägerebene im Wesentlichen entlang der Horizontalen erstreckt. Für das Einbringen des Dichtungsmaterials in den Überstandsbereich wird dann das Trägerbauteil im Rahmen des Herstellungsprozesses gegenüber der Horizontalen und/oder der Dosierkopf gegenüber der Vertikalen geneigt, wobei durch die erfindungsgemäß vorgesehene Geometrie dieses Dichtungskanals eine Aufnahme des flüssigen Dichtungsmaterials gewährleistet ist, ohne dass das Dichtungsmaterial unkontrolliert wegfließt.

Bevorzugt wird das Dichtungsmaterial in den Überstandsbereich - insbesondere wenn dieser an lediglich einer (Ober-) Seite des Trägerbauteils vorgesehen ist - zuletzt angebracht, bevor das Trägerbauteil zu einem Ablageort transportiert wird. Um die für den Transport zu dem Ablageort notwendige Zeit effektiv zu nutzen und damit das Herstellungsverfahren weiter zu optimieren, kann vorgesehen sein, dass das Trägerbauteil geneigt zur Horizontalen zu dem Ablageort transportiert wird. Über die damit verbundene Schräglage des Trägerbauteils ist sichergestellt, dass in dem Überstandsbereich vorhandenes und gegebenenfalls noch flüssiges Dichtungsmaterial nicht wegfließt. Die Transportzeit ist hierbei dann bevorzugt so bemessen, dass das ausschäumende Dichtungsmaterial innerhalb dieser Zeit soweit abgekühlt, dass es nicht mehr fließfähig ist, wenn das Trägerbauteil den Ablageort erreicht. Innerhalb der Transportzeit kühlt folglich das Dichtungsmaterial z.B. mindestens bis zum Stockpunkt ab. Ein Verkippen des flächigen Trägerbauteils am Ablageort führt somit nicht mehr dazu, dass Dichtungsmaterial wegfließt.

Beispielsweise ist für das Anbringen der Dichtung an einem flächigen Trägerbauteil für eine Fahrzeugtür vorgesehen, dass schäumbares Dichtungsmaterial in erhitzter und damit noch flüssiger Form über einen Dosierkopf an das Trägerbauteil angespritzt wird, wobei hierbei das Trägerbauteil und der Dosierkopf mit einer durchschnittlichen Geschwindigkeit von 250 bis 300 mm/s zueinander verstellt werden. Bei einer typischen Größe eines Trägerbauteils für eine Fahrzeugtür wird somit für die Anbringung einer umlaufenden Dichtung eine Gesamtzeit von 8 bis 9 s benötigt. Erfolgt das Anspritzen des Dichtungsmaterials in dem Überstandsbereich in einer zur Horizontalen geneigten Schräglage und wird das Trägerbauteil in dieser Schräglage innerhalb von 3 bis 4 s zu dem Ablageort transportiert, hat sich gezeigt, dass dieses Zeitfenster ausreichend ist, damit ein ausschäumendes Dichtungsmaterial mindestens seinen Stockpunkt erreicht und auch durch ein nachfolgendes Verkippen des Trägerbauteils am Ablageort nicht mehr unerwünscht fließt. Es kann somit kein Überlaufen oder Verlaufen des Dichtungsmaterials oder der damit gebildeten angespritzten Dichtungsmasse mehr erfolgen. Es ist selbstverständlich, dass die vorgenannten Zeiten lediglich exemplarisch sind. Beispielsweise wäre auch eine verkürzte Transportzeit möglich, sofern ein schneller ausschäumendes Dichtungsmaterial verwendet wird.

Weitere Vorteile und Merkmale der Erfindung werden bei der nachfolgenden Beschreibung von Ausführungsbeispielen anhand der beigefügten Figuren deutlich werden.

Hierbei zeigen:
- Figuren 1A-C: verschiedene Phasen eines erfindungsgemäßen Verfahrens zum Herstellen einer Dichtung an einem als Aggregateträger ausgebildeten erfindungsgemäßen Trägerbauteil;
- Figuren 2A-2B: in verschiedenen Ansichten einen möglichen Verfahrensschritt zum Anspritzen einer Dichtung in einem Überstandsbereich des Aggregateträgers, in dem ein Ende einer in den Aggregateträger integrierten Führungsschiene einen Rand einer Trägergrundfläche überragt;
- Figuren 3A-3B: in mit den Figuren 2A und 2B übereinstimmenden Ansichten eine mögliche Variante zum Anspritzen der Dichtung in den Überstandsbereich, bei der der Aggregateträger geneigt zur Horizontalen gehalten wird;
- Figur 4: in vergrößerter Querschnittansicht eine Veranschaulichung der Geometrie eines das Dichtungsmaterial aufnehmenden Dichtungskanals des Aggregateträgers;
- Figuren 5A-5B: vergrößerte Darstellungen des Dichtungskanals im Überstandsbereich in Querschnittsansicht mit hieran angespritztem flüssigem Dichtungsmaterial einerseits und ausgeschäumten Dichtungsmaterial andererseits;
- Figuren 6A-6B: in unterschiedlichen Querschnittsansichten ein weiteres Ausführungsbeispiel für einen Dichtungskanal an einem erfindungsgemäßen Aggregateträger;
- Figuren 7A-7B: ein weiteres Ausführungsbeispiel eines erfindungsgemäßen Aggregateträgers mit vergrößerter Darstellung des Dichtungskanals im Überstandsbereich in Querschnittsansicht;
- Figuren 8A-8B: ausschnittsweise und in Querschnittsansicht ein erfindungsgemäßes Ausführungsbeispiel einer Baugruppe mit einem Aggregateträger und einem Türinnenblech mit geneigter Dichtfläche, gegen die der Aggregateträger mit seiner ausgeschäumten Dichtung gedrückt wird;
- Figur 9: ein weiteres Ausführungsbeispiel für eine erfindungsgemäße Baugruppe mit gegenüber dem Ausführungsbeispiel der Figuren 8A und 8B abgewandelten Dichtungskanal und abgewandeltem Herstellungsverfahren;
- Figuren 10A-10C: verschiedene Ansichten eines als Aggregateträger ausgebildeten Trägerbauteils und einzelne Phasen während dessen Herstellung und Montage nach dem Stand der Technik.

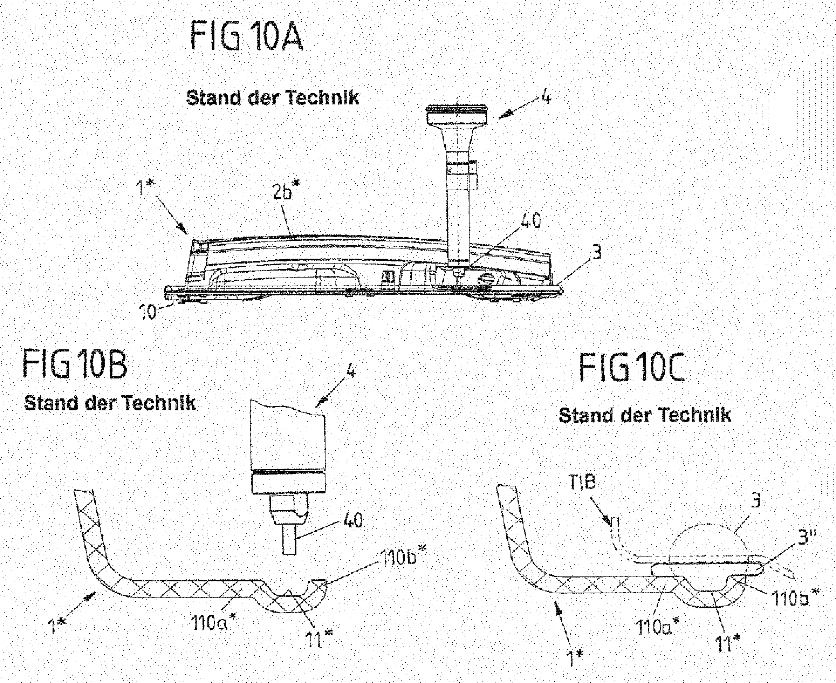

Die Figuren 10A, 10B und 10C veranschaulichen ein Trägerbauteil in Form eines Aggregateträgers 1* für eine Kraftfahrzeugtür nach dem Stand der Technik sowie die in der Praxis übliche Anbringung einer Dichtung 3 an einem solchen Aggregateträger 1*.

Der Aggregateträger 1* ist flächig ausgebildet und definiert eine Trägergrundfläche 10 die sich im Wesentlichen entlang einer Trägerebene erstreckt. Der Aggregateträger 1* trägt üblicherweise insbesondere unterschiedliche Funktionskomponenten eines Fensterhebers. Hierzu zählt beispielsweise eine Führungsschiene 2b* für die Führung der zu verstellenden Fensterscheibe. Eine solche Führungsschiene 2b* kann an der Trägergrundfläche 10 integriert oder separat an diese montierbar sein.

Zur dichtenden Anbringung des Aggregateträgers 1* an einem Türinnenblech TIB der Fahrzeugtür weist der Aggregateträger 1* eine umlaufende Dichtung 3 auf. Diese Dichtung 3 ist in an sich bekannter Weise entlang eines Randes des Aggregateträgers 1* angespritzt und beispielsweise durch ein schäumbares Dichtungsmaterial als Dichtraupe hergestellt. Über die Dichtung 3 kann der Aggregateträger 1* bei bestimmungsgemäßer Montage innerhalb der Fahrzeugtür an dem Türinnenblech TIB dichtend anliegen, so dass über den Aggregateträger 1* eine Montageöffnung innerhalb der Fahrzeugtür, über die ein Hohlraum zwischen Türaußenblech und Türinnenblech TIB zugänglich ist, dichtend verschlossen wird.

Für die Anbringung der Dichtung 3 an dem Aggregateträger 1* wird erhitztes und noch flüssiges Dichtungsmaterial über einen Dosierkopf 4 eines Dosierwerkzeugs an den Aggregateträger 1* angespritzt. Das Dichtungsmaterial tritt an einer Düse 40 des Dosierkopfes 4 aus. Zur Aufnahme des Dichtungsmaterials ist am Rand des Aggregateträgers 1* ein umlaufender rinnenartiger Dichtungskanal 11* mit einem U-förmigen Querschnitt vorgesehen. Dieser Dichtungskanal 11* wird durch zwei Ränder 110a* und 110b* berandet, deren Enden in einer zu der durch die Trägergrundfläche 10 aufgespannten Trägerebene parallelen Ebene liegen. Derart ist der Dichtungskanal 11* senkrecht zur Trägerebene offen, so dass das Dichtungsmaterial über den Dosierkopf 4 im Wesentlichen orthogonal zur Trägerebene des Aggregateträgers 1 in den Dichtungskanal 11* eingespritzt werden kann. Hierfür wird der flächige Aggregateträger 2 üblicherweise während des Anspritzens der Dichtung 3 parallel zur Horizontalen gehalten und beispielsweise liegend bearbeitet.

Für das Anspritzen der umlaufenden Dichtung 3 wird der Dosierkopf 4 an dem Aggregateträger 1* entlang verfahren und gegebenenfalls der Aggregateträger 1* um eine zur Trägerebene senkrechte Drehachse gedreht. Zwischen den Abschnitten des Dichtungskanals 11* und der Düse 40 des Werkzeugkopfes 4 ist hierbei stets ein gewisser Mindestabstand vorgesehen, um ein Verkleben oder Verstopfen der Düse 40 zu verhindern. Wie mit den Figuren 10B und 10C veranschaulicht ist, schäumt das Dichtungsmaterial der Dichtung 3 aus und wird dann bei Anlage des Aggregateträgers 1* an dem Türinnenblech TIB komprimiert, wie dies durch das Bezugszeichen 3" in Figur 10C illustriert ist, so dass der Aggregateträger 1* und das Türinnenblech TIB dichtend miteinander verbunden sind.

Das anhand der Figuren 10A bis 10C veranschaulichte Anspritzen der Dichtung 3 an den Aggregateträger 1* ist nicht mit größeren Schwierigkeiten verbunden, da der Dichtungskanal 11* für die Dichtung 3 senkrecht zur Trägerebene am Rand des Aggregateträgers 1* überall zugänglich ist. Das Anspritzen der Dichtung 3 ist jedoch erheblich erschwert und bisher in einem automatisierten Prozess nicht möglich, wenn an einem Aggregateträger über einen Rand der Trägergrundfläche hinausstehende Abschnitte vorhanden sind. Hier schafft die erfindungsgemäße Lösung Abhilfe.

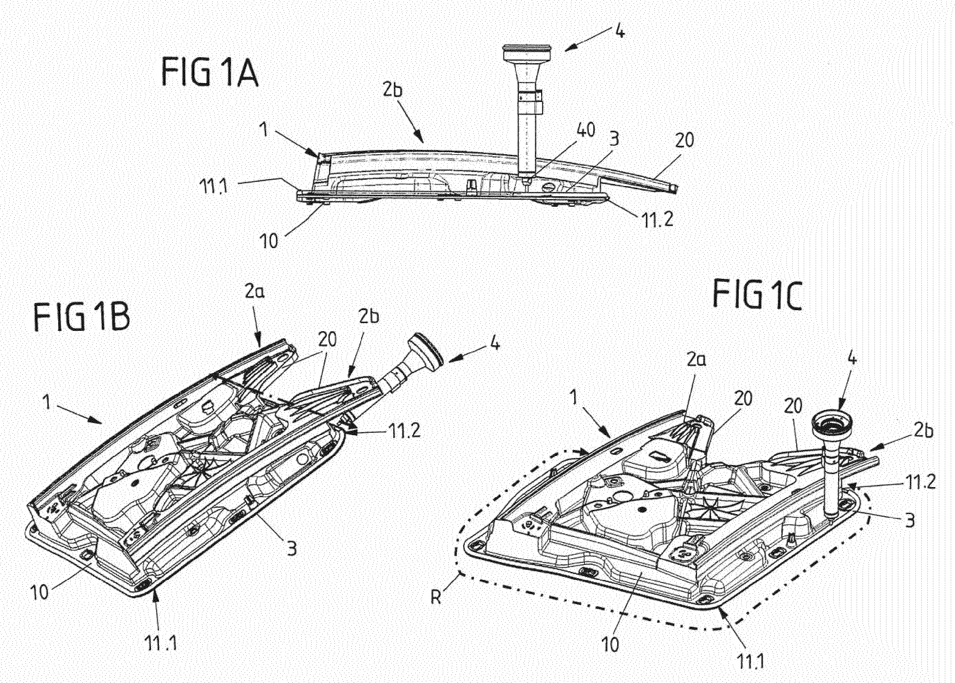

Ein erstes Ausführungsbeispiel eines erfindungsgemäßen Trägerbauteils in Form eines Aggregateträgers 1 und Details zu einem ersten Ausführungsbeispiels eines erfindungsgemäßen Herstellungsverfahren für das Anspritzen einer Dichtung 3 sind in den Figuren 1A bis 1C gezeigt. Ein Aggregateträger 1 weist hierbei zwei integrierte Führungsschienen 2a und 2b für einen hier nicht näher dargestellten Fensterheber auf. Beide Führungsschienen 2a und 2b weisen an einem oberen Rand des Aggregateträgers 1 jeweils einen Überstand 20 auf. Mit anderen Worten ragen Abschnitte der beiden Funktionskomponenten in Form der Führungsschienen 2a und 2b über einen äußeren Rand der Trägergrundfläche 10 des Aggregateträgers 1 hinaus. Diese Abschnitte 20 strecken sich hierbei über einen Teil eines Dichtungskanals 11.2 des Aggregateträgers 1 hinweg, so dass eine Dichtung 3 nicht auf konventionelle Art hieran angespritzt werden kann. An der Oberseite des Aggregateträgers 1 oder vielmehr im Bereich seinen oberen Randes, der von den Enden der integrierten Führungsschienen 2a und 2b überdeckt ist, liegt somit ein Überstandsbereich vor, an dem ein Dichtungskanal 11*, wie er in den Querschnittsansichten der Figuren 10B und 10C gezeigt ist, nicht genutzt werden kann, um hieran schäumbares Dichtungsmaterial in flüssiger Form anzuspritzen. Dies ist allenfalls außerhalb dieses Überstandsbereichs möglich. Demgemäß ist an dem Aggregateträger 1 auch außerhalb des Überstandsbereichs, das heißt, hier an den verbleibenden drei Seitenränder entlang, ein Dichtungskanal 11.1 mit einem konventionellen, U-förmigen Querschnittsprofil entsprechend dem Dichtungskanal 11* der Figuren 10A bis 10C vorgesehen.

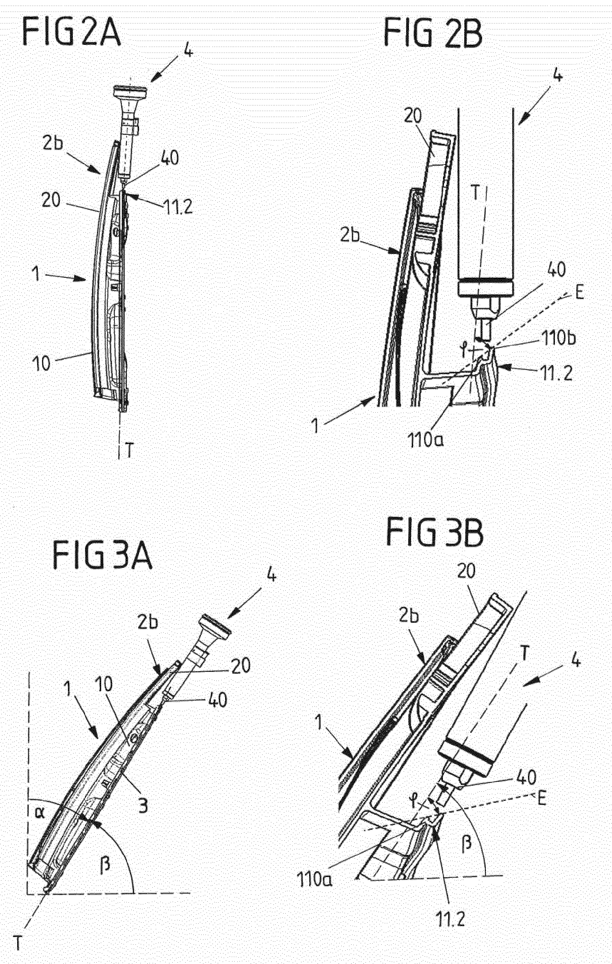

Die am Rand des Aggregateträgers 1 umlaufende Dichtung 3 wird somit an zwei geometrisch unterschiedlich ausgestaltete Dichtungskanäle 11.1 und 11.2 bzw. an einen einzigen Dichtungskanal mit geometrisch unterschiedlich ausgestalteten Abschnitten 11.1 und 11.2 angespritzt. Während das Anspritzen des Dichtungsmaterials für die Dichtung 3 im Bereich des Dichtungskanals 11.1 auf konventionelle Art und Weise bei horizontal gelagertem Aggregateträger 1 erfolgt, wird der Aggregateträger 1 geneigt oder senkrecht gestellt und/oder der Dosierkopf 4 geneigt, um noch flüssiges Dichtungsmaterial in den Dichtungskanal 11.2 im Bereich der überstehenden Führungsschienen 2a, 2b einzubringen. Der Dichtungskanal 11.2 ist hierfür gegenüber dem Dichtungskanal 11.1 oder dem Dichtungskanal 11* der Figuren 10A bis 10C abweichend ausgestaltet, wie anhand der nachfolgend noch näher erläuterten Figuren 2A bis 9 veranschaulicht ist.

Wie aus den Figuren 2A-2B und 3A-3B ersichtlich ist, wird bei einem erfindungsgemäß ausgestalteten Aggregateträger 1 der Dichtungskanal 11.2 z.B. im Querschnitt durch zwei vorspringende Schenkel 110a und 110b gebildet, die jeweils einen äußeren Rand des Dichtungskanals 11.2 definieren. Der rinnenförmige Dichtungskanal 11.2 ist hier im Querschnitt J-förmig ausgestaltet, so dass die beiden Schenkel 110a und 110b in der Querschnittsansicht unterschiedliche Längen aufweisen. Ihre freien Enden liegen ferner in einer Kanalebene E, die geneigt zu der Trägerebene T verläuft, die durch die Trägergrundfläche 10 aufgespannt ist. Die Kanalebene E verbindet folglich die Enden der die Berandung des Dichtungskanal 11.2 bildenden Schenkel 110a, 110b. Die Kanalebene E verläuft vorzugsweise um einen Neigungswinkel ϕ von 30 Grad bis 60 Grad geneigt zu der Trägerebene T; im Ausführungsbeispiel der Figuren 2A-2B und 3A-3B z.B. um etwa 45 Grad geneigt zur Trägerebene T.

Durch die erfindungsgemäße Ausgestaltung des Dichtungskanals 11.2 ist dieser in einer die Trägerebene T aufspannenden Raumrichtung offen. Über das Dosierwerkzeug 4 kann somit Dichtungsmaterial parallel zur Trägerebene T oder mit nur geringer Neigung (≤ 10 Grad) zur Trägerebene T in den Dichtungskanal 11.2 eingebracht werden. Hierbei ist durch die Formgebung des Dichtungskanals 11.2 sichergestellt, dass das flüssige Dichtungsmaterial während des Einbringens des flüssigen Dichtungsmaterials nicht wegfließt, wenn der Aggregateträger 1 hierbei im Wesentlichen entlang einer Vertikalen ausgerichtet ist (Figuren 2A bis 2B) oder wenn der Aggregateträger 1 hierbei relativ zur Vertikalen um einen Winkel α beziehungsweise relativ zur Horizontalen um einen Winkel β geneigt ist (Figuren 3A bis 3B).

Für das Anspritzen der Dichtung 3 wird hier beispielsweise zunächst das Dichtungsmaterial in den Dichtungskanal 11.1 entlang einer Umlaufrichtung R eingebracht, während der Aggregateträger 1 horizontal ausgerichtet ist. Für das Einbringen des Dichtungsmaterials in den Überstandsbereich, an dem die beiden Führungsschienen 2a und 2b über die Trägergrundfläche 10 hinausragen, wird der Aggregateträger 1 vollständig oder teilweise aufgerichtet und in einer vertikal aufgerichteten oder geneigten Lage gehalten. Hierbei kann dann auch der Dosierkopf 4 ebenfalls in eine relativ zur Vertikalen geneigten Lage verfahren werden, um das flüssige Dichtungsmaterial gezielt einzudosieren. Während bei dem Ausführungsbeispiel der Figuren 2A-2B der Dosierkopf 4 stets in einer (weitgehend) senkrechten Position verbleibt, das heißt, entlang der Vertikalen orientiert ist, und der Aggregateträger 1 während des Anspritzens der Dichtung 3 nachgeführt wird, sind in dem Ausführungsbeispiel der Figuren 3A-3B für das Anspritzen der Dichtung 3 in dem Überstandsbereich sowohl der Dosierkopf 3 als auch der Aggregateträger 1 geneigt, wobei der Dosierkopf 4 hierbei vorzugsweise stets um einen maximalen Anstellwinkel geneigt gehalten wird.

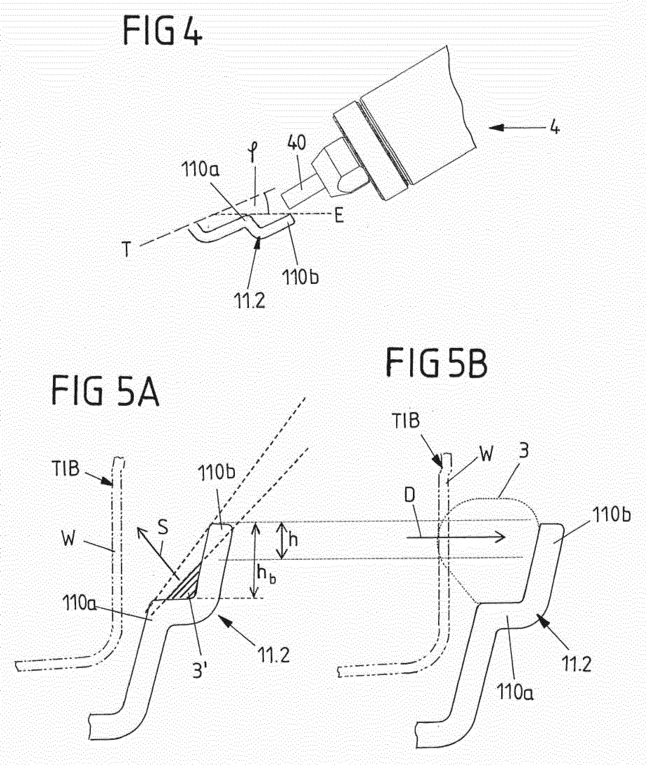

In der vergrößerten Querschnittsdarstellung der Figur 4 ist diese zuletzt genannte Variante nochmals näher veranschaulicht. Hierbei ist der Aggregateträger 1 soweit verkippt und in einer zur Horizontalen geneigten Lage gehalten, dass die Kanalebene E, die durch die beiden Enden der im Querschnitt sichtbaren Schenkel 110a und 110b definiert ist, parallel zur Horizontalen verläuft. Der Dichtungskanal 11.2 weist hier ferner im Unterschied zu den Ausführungsbeispielen der Figuren 2A-2B und 3A-3B ein L-förmiges Querschnittsprofil auf. Durch das Verkippen des Aggregateträgers 1 wird dabei erreicht, dass im Verbindungsbereich der beiden Schenkel 110a und 110b das noch flüssige Dichtungsmaterial 3' gesammelt wird.

Wie anhand der Figuren 5A und 5B illustriert ist, erfolgt hierbei eine Eindosierung flüssigen Dichtungsmaterials 3' mit einer solchen Menge, dass die Dichtung 3 nach dem Ausschäumen an den beiden Schenkels 110a und 110b abgestützt ist und diese somit als Widerlager dienen können, wenn der Aggregateträger 1 mit dem Türinnenblech TIB verbunden wird. Eine Füllhöhe des Dichtungsmaterials ist hierbei so gewählt, dass eine durch die Flüssigkeitsoberfläche definierte Füllebene F nicht bis an die Kanalebene E heranreicht. Der Dichtungskanal 11.2 wird somit nur teilweise mit Dichtungsmaterial befüllt, so dass eine Gesamtlänge oder- höhe h_{b} des längeren (äußeren) Schenkels 110b nicht vollständig ausgenutzt wird und ein unbenetzter Abschnitt des Schenkels 110b mit einer Höhe h ≈ ½ h_{b} verbleibt. An diesem unbenetzten Abschnitt des Schenkels 110b ist jedoch das ausgeschäumte Dichtungsmaterial abgestützt, wenn sich dessen Volumen gegenüber dem flüssigen Zustand um ein Vielfaches erhöht hat. So nimmt der längere Schenkel 110b einen Großteil einer Dichtkraft D auf, die über durch die Anbringung des Aggregateträgers 1 an dem Türinnenblech TIB ausübt wird, wenn die ausgeschäumte Dichtung 3 gegen eine Dichtfläche W des Türinnenblechs TIB gedrückt wird.

Über die L-Form und die damit vorzugsweise unter einem Winkel von etwa 90 Grad zueinander orientierten Schenkel 110a und 110b des Dichtungskanals 11.2 wird dem Dichtungsmaterial auch eine bevorzugte Schäumungsrichtung S vorgegeben, wie dies beispielhaft in der Figur 5A illustriert ist. Diese Schäumungsrichtung S weist vorzugsweise aus dem Dichtungskanal 11.2 hinaus und schließt einen in etwa identischen Winkel zu beiden Schenkeln 110a oder 110b ein.

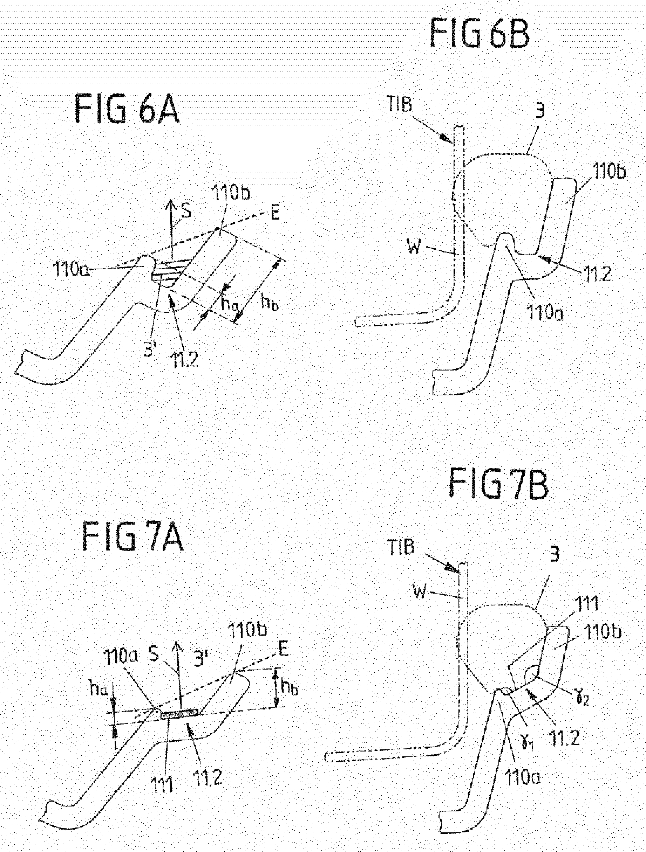

Bei dem Ausführungsbeispiel der Figuren 6A und 6B ist nochmals in vergrößerter Darstellung ein J-förmiger Dichtungskanal 11.2 veranschaulicht. Hier sind die unterschiedlichen Längen oder Höhen hₐ und h_{b} der beiden Schenkel 110a und 110b im Detail ersichtlich. Der gegenüber einer L-förmigen Querschnittsform hier ebenfalls vorspringende kürzere Schenkel 110a verhindert auch bei geringerer Neigung des Aggregateträgers 1 ein Ausfließen des noch flüssigen Dichtungsmaterials 3'. Wie aus der Figur 6B, die die ausgeschäumte Dichtung 3 bei bestimmungsgemäß eingebauten Aggregateträger 1 veranschaulicht, ersichtlich ist, behindert der vergleichsweise kurze Schenkel 110a (mit hₐ ≤ ⅓ h_{b} oder hₐ ≤¼ h_{b}) hierbei das Ausschäumen des Dichtungsmaterials aus dem Dichtungskanal 11.2 hinaus kaum.

Während bei dem Ausführungsbeispiel der Figuren 6A und 6B die beiden Schenkel 110a und 110b des Dichtungskanals 11.2 zu einem die beiden Schenkel 110a, 110b verbindenden Kanalboden im Wesentlichen denselben stumpfen Winkel einnehmen, ist bei dem Ausführungsbeispiel der Figuren 7A und 7B für die beiden Schenkel 110a und 110b jeweils eine unterschiedliche Orientierung zu einem Kanalboden 111 gewählt. Hierbei verläuft der erste kürzere (innere) Schenkel 110a unter einem Winkel γ₁ zu dem Kanalboden 111, der kleiner ist als ein Winkel γ₂, unter dem der zweite längere (äußere) Schenkel 110b zu dem Kanalboden 111 verläuft. Während der Winkel γ₁ zwischen kürzerem Schenkel 110a und Kanalboden 111 hier etwa 90 Grad beträgt, handelt es sich bei dem Winkel γ₂ zwischen längeren, äußerem Schenkel 110b und dem Kanalboden 111 um einen stumpfen Winkel, zum Beispiel im Bereich von 115 bis 145 Grad, insbesondere von etwa 135 Grad.

Darüber hinaus ist der Kanalboden 111 in dieser Variante - insbesondere im Unterschied zu dem Ausführungsbeispiel der Figur 6A und 6B - eben und flach ausgestaltet. Derart verläuft der Kanalboden 111 beim Einbringen des noch flüssigen Dichtungsmaterials 3- und entsprechender Neigung des Aggregateträgers 1 im Wesentlichen parallel zur Horizontalen.

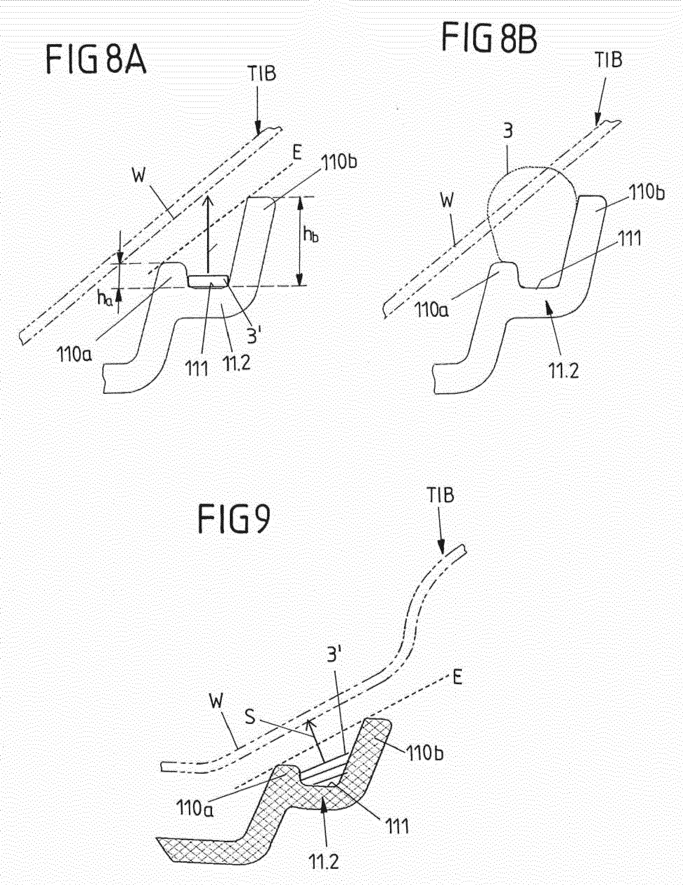

Mit den Figuren 8A-8B und 9 wird eine (Fahrzeugtür-) Baugruppe ausschnittsweise und in Querschnittsansicht veranschaulicht, bei der jeweils ein erfindungsgemäßer Aggregateträger 1 mit einem Türinnenblech TIB kombiniert ist, welches eine schräge Dichtfläche W aufweist, an der die Dichtung 3 bei bestimmungsgemäßer Anbringung des Aggregateträgers 3 anliegt. Die Dichtfläche W des Türinnenblechs TIB ist hier gegenüber der Vertikalen schräg nach Außen geneigt, um im Überstandsbereich des Aggregateträgers 1 eine verbesserte Anlage der Dichtung 3 zu ermöglichen.

Die Ausführungsvarianten der Figuren 8A-8B und 9 unterscheiden sind vor allem im Neigungswinkel zwischen Trägerebene T und Kanalebene E, der Neigung der Schenkel 110a, 110b zu dem Kanalboden 111 und der Neigung der Dichtfläche W zur Vertikalen. So ist bei der Variante der Figur 9 gegenüber der Variante der Figuren 8A-8B der Neigungswinkel zwischen dem längeren äußeren Schenkel zu dem Kanalboden 111 größer und damit korrespondierend sind auch die Neigungswinkel zwischen Trägerebene T und der Kanalebene E und zwischen Dichtfläche W des Türinnenblechs und der Vertikalen größer.

Grundsätzlich erfolgt beim Anspritzen der Dichtung 3 an dem Aggregateträger 1 mit seinem erfindungsgemäß ausgebildeten Dichtungskanal 11.2 die Einbringung des Dichtungsmaterials 3' vorzugsweise vollautomatisiert, wobei die Dichtung 3 in dem Überstandsbereich zuletzt an den üblicherweise aus einem Kunststoff hergestellten Aggregateträger 1 angespritzt wird. Unabhängig von dem dargestellten Querschnittsprofil des Dichtungskanals 11.2 kann es vorteilhaft sein, dass der Aggregateträger 1 während des Anspritzens der Dichtung 3 in den Überstandsbereich sowie für den anschließenden Transport zu einem Ablageort in einer geneigten oder aufgerichteten Lage, zum Beispiel entsprechend der Figur 2A oder 3A, gehalten wird. Die Transportzeit bis zum Erreichen des Ablageortes, an dem der Aggregateträger 1 abgelegt wird, so dass seine Trägerebene T parallel zur Horizontalen verläuft, ist hierbei bevorzugt so bemessen, dass das ausschäumende Dichtungsmaterial mindestens bis zum Stockpunkt abkühlt. Bei Erreichen des Ablageorts ist somit das Dichtungsmaterial bzw. die Dichtungsmasse nicht mehr fließfähig und damit insbesondere nicht mehr in der Lage, allein unter Wirkung der Schwerkraft an oder in dem Dichtungskanal 11.2 oder 11.1 entlang oder hieraus zu fließen.

Mit der erfindungsgemäßen Lösung kann somit unter Beibehaltung eines automatisierbaren Verfahrens zum Aufspritzen von schäumbaren Dichtungsmaterial eine Dichtung 3 auch bei (Kunststoff-) Trägerbauteile, zum Beispiel Aggregateträgern oder Modulträgern, mit über eine Trägergrundfläche 10 hinausstehenden Abschnitten eine Dichtung 3 problemlos angebracht werden. Insbesondere bei Aggregateträgern 1 mit hierin integrierten Führungsschienen 2a und 2b hat sich die erfindungsgemäße Lösung als besonders vorteilhaft erwiesen.

### Bezugszeichenliste

- 1, 1*: Aggregateträger (Trägerbauteil)
- 10: Trägergrundfläche
- 11*: Dichtungskanal
- 11.1, 11.2: Dichtungskanal
- 110a, 110b: Schenkel
- 110a*, 110b*: Randabschnitt
- 111: Kanalboden
- 20: Überstand
- 2a, 2b, 2b*: Führungsschiene
- 3, 3', 3": Dichtung / Dichtungsmaterial
- 4: Dosierkopf
- 40: Düse
- D: Dichtkraft
- E: Kanalebene
- F: Füllebene
- h, hₐ, h_{b}: Höhe
- R: Umlaufrichtung
- S: Schäumungsrichtung
- T: Trägerebene
- TIB: Türinnenblech (Fahrzeugteil)
- W: Dichtfläche
- α, β, ϕ,γ₁, γ₂: Winkel

## Patentansprüche

1. Trägerbauteil für ein Fahrzeug, mit
- einer Trägergrundfläche (10), an der Funktionskomponenten (2a, 2b) eines Fensterhebers vorgesehen sind und die eine Trägerebene (T) definiert, in der sich im Wesentlichen die Trägergrundfläche (10) erstreckt, und
- mindestens einem an einem Randbereich des Trägerbauteils (1) entlang verlaufenden Dichtungskanal (11.2), mit einer hierin zumindest teilweise aufgenommenen Dichtung (3), mittels der das Trägerbauteil (1) dichtend an einem Fahrzeugteil (TIB) angebracht werden kann,
wobei wenigstens eine Funktionskomponente (2a, 2b) des Fensterhebers über einen äußeren Rand der Trägergrundfläche (10) hinausragt oder hierüber hinausragend an dem Trägerbauteil (1) angeordnet ist, so dass sich ein über den Rand der Trägergrundfläche (10) hinausragender Abschnitt (20) dieser Funktionskomponente (2a, 2b), ein die Funktionskomponente tragender Abschnitt des Trägerbauteils (1) oder ein Abschnitt eines die Funktionskomponente tragenden und an dem Trägerbauteil (1) befestigten Bauteils über zumindest einen Teil des Dichtungskanals (11.2) hinweg erstreckt, und
wobei der Dichtungskanal (11.2) zumindest in einem Überstandsbereich, in dem sich der Abschnitt (20) über den Dichtungskanal (11.2) hinweg erstreckt, im Querschnitt durch wenigstens zwei Schenkel (110a, 110b) gebildet ist, die jeweils einen äußeren Rand des Dichtungskanals (11.2) definieren und deren Enden in einer Kanalebene (E) liegen, die geneigt zur Trägerebene (T) verläuft, so dass der Dichtungskanal (11.2) in einer die Trägerebene (T) aufspannenden Raumrichtung offen ist,
**dadurch gekennzeichnet, dass**
die wenigstens zwei Schenkel (110a, 110b) über einen sich zwischen ihnen erstreckenden Kanalboden (111) des Dichtungskanals (11.2) miteinander verbunden sind, wobei die zwei über den Kanalboden (111) des Dichtungskanals (11.2) miteinander verbundenen Schenkel (110a, 110b) unter verschiedenen Winkeln (γ₁, γ₂) zu dem Kanalboden (111) verlaufen.

2. Trägerbauteil nach Anspruch 1, **dadurch gekennzeichnet, dass** der Dichtungskanal (11.2) zumindest in dem Überstandsbereich im Querschnitt J- oder L-förmig ist.

3. Trägerbauteil nach Anspruch 1, **dadurch gekennzeichnet, dass** der Dichtungskanal (11.2) zumindest in dem Überstandsbereich im Querschnitt U- oder V-förmig ist.

4. Trägerbauteil nach einem der Ansprüche 1 bis 3, **dadurch gekennzeichnet, dass** die wenigstens zwei Schenkel (110a, 110b)
- unterschiedliche Längen aufweisen und/oder
- von der Trägergrundfläche (10) vorspringend ausgebildet sind.

5. Trägerbauteil nach einem der vorhergehenden Ansprüche, **dadurch gekennzeichnet, dass** ein erster kürzerer Schenkel (110a) unter einem Winkel (γ₁) zu dem Kanalboden (111) verläuft, der kleiner ist als ein Winkel (γ₂), unter dem ein zweiter längerer Schenkel (110b) zu dem Kanalboden (111) verläuft.

6. Trägerbauteil nach einem der vorhergehenden Ansprüche, **dadurch gekennzeichnet, dass** einer der über den Kanalboden (111) des Dichtungskanals (11.2) miteinander verbundenen Schenkel (110a, 110b) unter einem stumpfen Winkel (γ2) zu dem Kanalboden (111) verläuft.

7. Trägerbauteil nach einem der vorhergehenden Ansprüche, **dadurch gekennzeichnet, dass**
(a) einer der Schenkel (110a, 110b) am Rand der Trägergrundfläche (10) liegt und/oder
(b) der Dichtungskanal (11.2) an dem Rand des Trägerbauteils (1) umlaufend ausgebildet ist und mindestens zwei Bereiche aufweist, die im Querschnitt zueinander unterschiedlich sind, und/oder mindestens zwei im Querschnitt unterschiedliche Dichtungskanäle (11.1, 11.2) an dem Trägerbauteil (1) vorgesehen sind.

8. Baugruppe, mit einem Trägerbauteil (1) nach einem der Ansprüche 1 bis 7 und einem Fahrzeugteil (TIB), das eine relativ zu Trägergrundfläche (10) geneigte verlaufende Dichtfläche (W) aufweist, an der das Trägerbauteil (1) im Bereich der Dichtung (3) dichtend anliegt.

9. Verfahren zur Herstellung der Dichtung an einem Trägerbauteil nach einem der Ansprüche 1 bis 7, wobei die Dichtung (3) aus einem schäumbaren Dichtungsmaterial hergestellt wird und das schäumbare Dichtungsmaterial in flüssiger Form in den mindestens einen Dichtungskanal (11.1, 11.2) in einer Menge dosiert wird, dass die Dichtung (3) nach Ausschäumen des Dichtungsmaterials an den wenigstens zwei Schenkeln (110a, 110b) abgestützt ist.

10. Verfahren nach Anspruch 9, **dadurch gekennzeichnet, dass** das Dichtungsmaterial über einen Dosierkopf (4) eines Dosierwerkzeugs in den Dichtungskanal (11.2) eingebracht wird und
- das Trägerbauteil (1) während des Einbringens des Dichtungsmaterials zumindest zeitweise geneigt zur Horizontalen gehalten wird und/oder
- der Dosierkopf (4) während des Einbringens des Dichtungsmaterials zumindest zeitweise geneigt zur Vertikalen gehalten wird.

11. Verfahren nach Anspruch 10, **dadurch gekennzeichnet, dass** der Dichtungskanal (11.2) an dem Rand des Trägerbauteils (1) umlaufend ausgebildet ist und mindestens zwei Bereiche aufweist, die im Querschnitt zueinander unterschiedlich sind, und/oder mindestens zwei im Querschnitt unterschiedliche Dichtungskanäle (11.1, 11.2) an dem Trägerbauteil (1) vorgesehen sind, und je nach Bereich oder Dichtungskanal das Trägerbauteil (1) und der Dosierkopf (4) zueinander unterschiedlich ausgerichtet sind.

12. Verfahren nach Anspruch 11, **dadurch gekennzeichnet, dass** für ein Einbringen von Dichtungsmaterial in den Dichtungskanal (11.1) außerhalb des Überstandsbereiches das Trägerbauteil (1) derart ausgerichtet ist, dass sich die Trägerebene (T) im Wesentlichen entlang der Horizontalen erstreckt.

13. Verfahren nach Anspruch 12, **dadurch gekennzeichnet, dass** das Trägerbauteil (1) gegenüber der Horizontalen und/oder der Dosierkopf (4) gegenüber der Vertikalen geneigt werden, um Dichtungsmaterial im Überstandsbereich in den die mindestens zwei Schenkel (110a, 110b) aufweisenden Dichtungskanal (11.2) einzubringen.

14. Verfahren nach Anspruch 11 oder 13, **dadurch gekennzeichnet, dass** das Trägerbauteil (1) zur Horizontalen geneigt zu einem Ablageort transportiert wird, nachdem das Dichtungsmaterial hieran bestimmungsgemäß vorgesehen wurde.

## Claims

1. A carrier component for a vehicle, comprising
- a carrier base surface (10) on which functional components (2a, 2b) of a window lifter are provided and which defines a carrier plane (T) in which the carrier base surface (10) substantially extends, and
- at least one sealing channel (11.2) extending along an edge region of the carrier component (1), with a seal (3) at least partly accommodated therein, by means of which the carrier component (1) can sealingly be mounted on a vehicle part (TIB),
wherein at least one functional component (2a, 2b) of the window lifter protrudes beyond an outer edge of the carrier base surface (10) or is arranged to protrude from the carrier component (1), so that a portion (20) of this functional component (2a, 2b) protruding beyond the edge of the carrier base surface (10), a portion of the carrier component (1) carrying the functional component or a portion of a component carrying the functional component and attached to the carrier component (1) extends across at least a part of the sealing channel (11.2), and
wherein at least in a protruding region in which the portion (20) extends across the sealing channel (11.2), the sealing channel (11.2) in cross-section is formed by at least two legs (110a, 110b) which each define an outer edge of the sealing channel (11.2) and whose ends lie in a channel plane (E) which extends inclined relative to the carrier plane (T), so that the sealing channel (11.2) is open in a direction in space defining the carrier plane (T),
**characterized in that**
the at least two legs (110a, 110b) are connected with each other via a channel bottom (111) of the sealing channel (11.2) extending between the same, wherein the two legs (110a, 110b) which are connected with each other via the channel bottom (111) extend at different angles (γ₁, γ₂) to the channel bottom (111).

2. The carrier component according to claim 1, **characterized in that** the sealing channel (11.2) is J- or L-shaped in cross-section at least in the protruding region.

3. The carrier component according to claim 1, **characterized in that** the sealing channel (11.2) is U- or V-shaped in cross-section at least in the protruding region.

4. The carrier component according to any of claims 1 to 3, **characterized in that** the at least two legs (110a, 110b)
- have different lengths and/or
- are formed to protrude from the carrier base surface (10).

5. The carrier component according to any of the preceding claims, **characterized in that** a first shorter leg (110a) extends at an angle (γ₁) to the channel bottom (111) which is smaller than an angle (γ₂) at which a second longer leg (110b) extends to the channel bottom (111).

6. The carrier component according to any of the preceding claims, **characterized in that** one of the legs (110a, 110b) which are connected with each other via a channel bottom (111) of the sealing channel (11.2) extends at an obtuse angle (γ₂) to the channel bottom (111).

7. The carrier component according to any of the preceding claims, **characterized in that**
(a) one of the legs (110a, 110b) lies at the edge of the carrier base surface (10) and/or
(b) the sealing channel (11.2) is formed to extend around the edge of the carrier component (1) and includes at least two regions which are different from each other in cross-section and/or at least two sealing channels (11.1, 11.2) different in cross-section are provided on the carrier component (1).

8. An assembly, comprising a carrier component (1) according to any of claims 1 to 7 and a vehicle part (TIB) which includes a sealing surface (W) extending inclined relative to the carrier base surface (10), against which the carrier component (1) sealingly rests in the region of the seal (3).

9. A method for manufacturing the seal on a carrier component according to any of claims 1 to 7, wherein the seal (3) is manufactured from an expandable sealing material and the expandable sealing material is dosed into the at least one sealing channel (11.1, 11.2) in liquid form in a quantity such that after expansion of the sealing material the seal (3) is supported on the at least two legs (110a, 110b).

10. The method according to claim 9, **characterized in that** the sealing material is introduced into the sealing channel (11.2) via a dosing head (4) of a dosing tool, and
- during introduction of the sealing material the carrier component (1) at least temporarily is held inclined relative to the horizontal, and/or
- during introduction of the sealing material the dosing head (4) at least temporarily is held inclined relative to the vertical.

11. The method according to claim 10, **characterized in that** the sealing channel (11.2) is formed to extend around the edge of the carrier component (1) and includes at least two regions which are different from each other in cross-section and/or at least two sealing channels (11.1, 11.2) different in cross-section are provided on the carrier component (1), and depending on region or sealing channel the carrier component (1) and the dosing head (4) are aligned differently relative to each other.

12. The method according to claim 11, **characterized in that** for an introduction of sealing material into the sealing channel (11.1) outside the protruding region the carrier component (1) is aligned such that the carrier plane (T) substantially extends along the horizontal.

13. The method according to claim 12, **characterized in that** the carrier component (1) is inclined with respect to the horizontal and/or the dosing head (4) is inclined with respect to the vertical, in order to introduce sealing material in the protruding region into the sealing channel (11.2) including the at least two legs (110a, 110b).

14. The method according to claim 11 or 13, **characterized in that** the carrier component (1) inclined relative to the horizontal is transported to a deposition site, after the sealing material has properly been provided thereon.

## Revendications

1. Composant porteur pour un véhicule, avec
- une surface de base porteuse (10), au niveau de laquelle des composantes fonctionnelles (2a, 2b) d'un lève-vitre sont prévues et qui définit un plan porteur (T), dans lequel la surface de base porteuse (10) s'étend sensiblement, et
- au moins un canal d'étanchéité (11.2) s'étendant le long d'une zone de bord du composant porteur (1), avec un joint d'étanchéité (3) logé dans celui-ci au moins en partie, au moyen duquel le composant porteur (1) peut être installé de manière étanche au niveau d'une pièce de véhicule (TIB),
dans lequel au moins une composante fonctionnelle (2a, 2b) du lève-vitre dépasse d'un bord extérieur de la surface de base porteuse (10) ou est disposée en dépassant de celui-ci au niveau du composant porteur (1), de sorte qu'une section (20) dépassant du bord de la surface de base porteuse (10) de ladite composante fonctionnelle (2a, 2b), une section, supportant la composante fonctionnelle, du composant porteur (1) ou une section d'un composant supportant la composante fonctionnelle et fixé au niveau du composant porteur (1) s'étendent sur au moins une partie du canal d'étanchéité (11.2), et
dans lequel le canal d'étanchéité (11.2) est formé au moins dans une zone de débord, dans laquelle la section (20) s'étend au-delà du canal d'étanchéité (11.2), dans la section transversale par au moins deux branches (110a, 110b), qui définissent respectivement un bord extérieur du canal d'étanchéité (11.2) et dont les extrémités se situent dans un plan de canal (E), qui s'étend de manière inclinée par rapport au plan porteur (T) de sorte que le canal d'étanchéité (11.2) est ouvert dans une direction spatiale déployant le plan porteur (T),
**caractérisé en ce que**
les au moins deux branches (110a, 110b) sont reliées entre elles par l'intermédiaire d'un fond de canal (111), s'étendant entre elles, du canal d'étanchéité (11.2), dans lequel les deux branches (110a, 110b) reliées entre elles par l'intermédiaire du fond de canal (111) du canal d'étanchéité (11.2) s'étendent selon des angles (γ₁, γ₂) différents par rapport au fond de canal (111).

2. Composant porteur selon la revendication 1, **caractérisé en ce que** le canal d'étanchéité (11.2) est au moins dans la zone de débord en forme de J ou de L dans la section transversale.

3. Composant porteur selon la revendication 1, **caractérisé en ce que** le canal d'étanchéité (11.2) est au moins dans la zone de débord en forme de U ou de V dans la section transversale.

4. Composant porteur selon l'une quelconque des revendications 1 à 3, **caractérisé en ce que** les au moins deux branches (110a, 110b)
- présentent des longueurs différentes, et/ou
- sont réalisées de manière à faire saillie de la surface de base porteuse (10).

5. Composant porteur selon l'une quelconque des revendications précédentes, **caractérisé en ce qu'**une première branche (110a) plus courte s'étend selon un angle (γ₁) par rapport au fond de canal (111), qui est inférieur à un angle (γ₂), selon lequel une deuxième branche (110b) plus longue s'étend par rapport au fond de canal (111).

6. Composant porteur selon l'une quelconque des revendications précédentes, **caractérisé en ce qu'**une des branches (110a, 110b) reliées entre elles par l'intermédiaire du fond de canal (111) du canal d'étanchéité (11.2) s'étend selon un angle obtus (γ₂) par rapport au fond de canal (111).

7. Composant porteur selon l'une quelconque des revendications précédentes, **caractérisé en ce que**
(a) une des branches (110a, 110b) se situe au niveau du bord de la surface de base porteuse (10), et/ou
(b) le canal d'étanchéité (11.2) est réalisé de manière périphérique au niveau du bord du composant porteur (1) et présente au moins deux zones, qui sont différentes les unes par rapport aux autres dans la section transversale et/ou au moins deux canaux d'étanchéité (11.1, 11.2) différents dans la section transversale sont prévus au niveau du composant porteur (1).

8. Module avec un composant porteur (1) selon l'une quelconque des revendications 1 à 7 et une pièce de véhicule (TIB), qui présente une surface étanche (W) s'étendant de manière inclinée par rapport à la surface de base porteuse (10), au niveau de laquelle le composant porteur (1) repose de manière étanche dans la zone du joint d'étanchéité (3).

9. Procédé servant à fabriquer le joint d'étanchéité au niveau d'un composant porteur selon l'une quelconque des revendications 1 à 7, dans lequel le joint d'étanchéité (3) est fabriqué à partir d'un matériau d'étanchéité pouvant être moussé et le matériau d'étanchéité pouvant être moussé est dosé sous une forme liquide dans l'au moins un canal d'étanchéité (11.1, 11.2) en une quantité, que le joint d'étanchéité (3) prend appui après le moussage du matériau d'étanchéité au niveau des au moins deux branches (110a, 110b).

10. Procédé selon la revendication 9, **caractérisé en ce que** le matériau d'étanchéité est introduit par l'intermédiaire d'une tête de dosage (4) d'un outil de dosage dans le canal d'étanchéité (11.2), et
- le composant porteur (1) est maintenu pendant l'introduction du matériau d'étanchéité au moins par intermittence de manière inclinée par rapport à l'horizontale, et/ou
- la tête de dosage (4) est maintenue pendant l'introduction du matériau d'étanchéité au moins par intermittence de manière inclinée par rapport à la verticale.

11. Procédé selon la revendication 10, **caractérisé en ce que** le canal d'étanchéité (11.2) est réalisé de manière périphérique au niveau du bord du composant porteur (1) et présente au moins deux zones, qui sont différentes les unes par rapport aux autres dans la section transversale, et/ou au moins deux canaux d'étanchéité (11.1, 11.2) différents dans la section transversale sont prévus au niveau du composant porteur (1), et selon la zone ou le canal d'étanchéité, le composant porteur (1) et la tête de dosage (4) sont orientés différemment l'un par rapport à l'autre.

12. Procédé selon la revendication 11, caractérisé en ce pour une introduction de matériau d'étanchéité dans le canal d'étanchéité (11.1), le composant porteur (1) est orienté en dehors de la zone de débord de telle manière que le plan porteur (T) s'étend sensiblement le long de l'horizontale.

13. Procédé selon la revendication 12, **caractérisé en ce que** le composant porteur (1) est incliné par rapport à l'horizontale et/ou la tête de dosage (4) est inclinée par rapport à la verticale, pour introduire du matériau d'étanchéité dans la zone de débord dans le canal d'étanchéité (11.2) présentant les au moins deux branches (110a, 110b).

14. Procédé selon la revendication 11 ou 13, **caractérisé en ce que** le composant porteur (1) est transporté de manière inclinée par rapport à l'horizontale en direction d'un lieu de dépôt après que le matériau d'étanchéité a été prévu à ce niveau conformément à l'usage prévu.
